(19) Europäisches Patentamt
European Patent Office
Office européen des brevets

(11) Veröffentlichungsnummer: **0 273 237**
**A2**

(12) **EUROPÄISCHE PATENTANMELDUNG**

(21) Anmeldenummer: **87118011.3**

(51) Int. Cl.4: **C08F 8/30**

(22) Anmeldetag: **05.12.87**

(30) Priorität: **12.12.86 DE 3642467**

(43) Veröffentlichungstag der Anmeldung:
**06.07.88 Patentblatt 88/27**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**
Erfinder: **Wagner, Daniel, Dr.**
**Schlossgasse 43**
**D-6706 Wachenheim(DE)**

(54) **Polymere mit Aminogruppen, deren Herstellung und Verwendung.**

(57) Die Erfindung betrifft mit Aminogruppen funktionell modifizierte Homo-, Co-und/oder Blockcopolymere aus Vinylaromaten und/oder Dienen, welche funktionelle Gruppen der allgemeinen Formel I enthalten

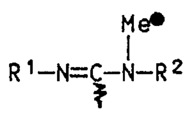

(I),

worin N = Stickstoff, $R^1$, $R^2$ = ein Alkyl-, Cycloalkyl-oder Arylrest und Me ein Alkalimetall ist, ein Verfahren zur Herstellung der Polymeren (I) aus lebenden, anionisch polymerisierten oder aus mit Alkalimetall metallierten Homo-, Co-und/oder Blockcopolymeren aus Vinylaromaten und/oder Dienen, indem diese mit Stickstoffverbindungen der allgemeinen Formel II

$R^1$-N = C = N-$R^2$ (II),

in Gegenwart eines gegebenenfalls unpolaren Lösungsmittels umgesetzt werden, und die Verwendung der Polymeren (I) zur Herstellung analoger Polymere mit den funktionellen Gruppen der allgemeinen Formel III

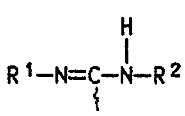

(III)

durch Hydrolyse oder Alkoholyse, und die Verwendung der funktionell modifizierten Polymeren (III) zur Herstellung von Polymeren, die durch Hydrierbehandlung unter teilweiser oder vollständiger Absättigung der aliphatischen ungesättigten Bindungen hergestellt werden.

EP 0 273 237 A2

## Polymere mit Aminogruppen, deren Herstellung und Verwendung

Die Erfindung betrifft mit Aminogruppen funktionell modifizierte Homo-, Co-und/oder Blockcopolymere aus Vinylaromaten und/oder Dienen, deren Herstellung aus lebenden, anionisch polymerisierten oder aus mit Alkalimetall metallisierten Homo-, Co-und/oder Blockcopolymeren aus Vinylaromaten und/oder Dienen und deren Verwendung zur Herstellung analoger Polymeren durch Hydrolyse oder Alkoholyse.

Bei derartigen Polymeren handelt es sich um Verbindungen mit Molekulargewichten aus dem Gewichtsmittel $M_w$ zwischen 400 und 500.000, bevorzugt zwischen 2.000 und 400.000, die funktionelle Gruppen und/oder Endgruppen an den Makromolekülen statistisch verteilt und/oder an den Kettenenden enthalten.

Funktionell modifizierte Polymere aus Vinylaromaten und/oder Dienen und deren Herstellung aus den entsprechenden lebenden, anionisch polymerisierten oder aus den mit Alkalimetall metallisierten Polymeren sind bereits seit längerer Zeit bekannt. Danach gibt es eine Vielzahl elektrophiler Substanzen, die lebende Polymerketten nicht nur abbrechen, sondern eine funktionelle Gruppe in das Polymere einführen. So können z.B. Polymere mit Hydroxyl-, Carboxyl-, Thiol-oder Halogengruppen durch Umsatz lebender Polymere mit Verbindungen wie Epoxiden, Aldehyden, Ketonen, Kohlendioxid, Anhydriden, cyclischen Sulfiden, Disulfiden oder Halogen dargestellt werden. Mit primären oder sekundären Aminogruppen substituierte Polymere lassen sich dagegen nicht durch Umsetzen mit primären oder sekundären Aminen darstellen, da diese durch Protonentransfer zum einfachen Abbruch lebender Polymerisaten führen.

Lediglich tertiäre Aminogruppen lassen sich durch Umsetzen mit N,N-disubstituierten Aminoaldehyden oder -ketonen wie z.B. p-N,N-Dimethylaminobenzaldehyd einführen (vgl. US-Patent 3,109,871).

Die Herstellung von Polydienen mit primären Aminogruppen unter Verwendung von Katalysatoren mit geschützter Aminofunktion, wie z.B. p-Lithium-N,N-bis(trimethylsilyl)anilin wird von D.N. Schulz und A.F. Halasa in der Zeitschrift J.Polym.Sci., Polym.Chem.Ed. 15 (1977), Seiten 2401 bis 2410 beschrieben. Die beschränkte Anwendbarkeit dieses Verfahrens ist im wesentlichen in der schlechten Löslichkeit der modifizierten Initiatoren in unpolaren Kohlenwasserstofflösungsmitteln begründet. Die Unmöglichkeit der Verwendung polarer Lösungsmittel wie Diethylether im zitierten Beispiel wirkt sich jedoch bekanntlich nachteilig auf Mikrostruktur der Dienpolymeren aus.

Von R. Koenig et al. wird in der Zeitschrift Europ.Polym.J. 3 (1967), Seiten 723 bis 731 berichtet, daß die Desaktivierung von anionisch, lebendem Polystyrol durch Benzylidenanilin zu Polymeren mit sekundären aromatischen Aminendgruppen führt. Die Autoren kommen darin zu dem Ergebnis, daß die Reaktionsfähigkeit der Kohlenstoff-Stickstoff-Doppelbindungen gegenüber lebendem Polystyrolnatrium eine quantitative Umsetzung nur in einem polaren Lösungsmittel erlaubt.

Die Synthese von Polymeren mit primären Aminogruppen durch Reaktion von anionisch lebenden Polymeren mit geschützten Aminierungsreagenzien wie N-Trimethylsilylbenzylidenamin ist von A. Hirao et al. in der Zeitschrift Makromol. Chem. Rapid Commun. 3 (1982), Seiten 59 bis 63, beschrieben.

Nachteilig bei diesem bekannten Verfahren zur Einführung von Amingruppen in Polymere ist, daß diese häufig nur unter Verwendung eines vielfachen Überschusses an Aminierungsreagenz mit genügend hoher Ausbeute verlaufen, so daß die mit Amin modifizierten Polymere durch inerte Nebenprodukte verunreinigt sind.

Ferner muß nach der Umsetzung in einer zusätzlichen Reaktion der Trimethylsilylrest aus den Umsetzungsprodukten abgespalten werden. Die Entfernung des entstehenden Nebenproduktes, Trimethylsilanol ist schwierig.

In der EP-A1-0 211 395 ist schließlich die Herstellung von Polymeren mit Aminendgruppen vorgeschlagen worden durch Umsetzung lebender Lithiummetalle enthaltender Polymerer mit Diaziridinen. Hier werden sehr spezifische Reagenzien benötigt.

Aufgabe der Erfindung war es daher, in einer eindeutigen und mit hohem Umsatz verlaufenden Reaktion Polymere aus Vinylaromaten und/oder Dienen mit mindestens einer aminischen Gruppe und/oder Endgruppe zu schaffen. Es bestand weiterhin die Aufgabe, die Umsetzung gegebenenfalls in unpolaren Lösungsmitteln, insbesondere in einem aliphatischen, cycloaliphatischen und/oder aromatischen Kohlenwasserstoff und unter Verwendung von stöchiometrischem oder geringfügigem Überschuß eines leicht zugänglichen Aminierungsreagenzes, durchzuführen. Es bestand ferner die Aufgabe Polymere mit Aminogruppen auf einfachem Wege zu erhalten.

Es wurde nun gefunden, daß dieses Ziel erreicht werden kann mit Polymeren nach Ansprüchen 1 und 2, einem Verfahren zur Herstellung von derartigen Polymeren nach Anspruch 3 und Verwendung der Polymeren gemäß Ansprüchen 4 und 5.

Nach erfindungsgemäßem Verfahren werden metallorganische Gruppen enthaltende Polymere mit Verbindungen umgesetzt, die mindestens eine [-N = C = N-]-Gruppe enthalten.

Derartige Verbindungen sind als Carbodiimide aus der Literatur bekannt. Geeignete Verbindungen sind z.B. N,N'-Dicyclohexylcarbodiimid, N,N'-Diisopropylcarbodiimid oder N,N'-Diphenylcarbodiimid.

Diese Aufzählung ist nicht vollständig und soll keine Abgrenzung sein.

Geeignete Verfahren zur Herstellung von Verbindungen vom Typ der Carbodiimide sind bekannt und werden z.B. in Organic Syntheses, Vol. 43 (1963), Seiten 31 bis 33, eingehend beschrieben und referiert.

Erfindungsgemäß sind unter Homo-, Co-und Blockcopolymeren aus Vinylaromaten und/oder Dienen die bekannten Polymere dieser Art zu verstehen, die anionisch z.B. mit Hilfe von alkalimetallorganischen Initiatoren aus den entsprechenden Monomeren erhalten werden können. Derartige Verfahren sind hinlänglich bekannt, so daß sie hier nicht weiter erörtert werden müssen (vgl. z.B. GB-Patent 1 444 680 oder J.Appl.Polym.Sci. 22 (1978), Seiten 2007 bis 2013).

Als Vinylaromaten kommen insbesondere Styrol, die verschiedenen Alkylstyrole oder Vinylnaphthalin, als Diene Butadien, Isopren, 2,3-Dimethylbutadien, Piperylen, Phenylbutadien oder andere anionisch polymerisierbare konjugierte $C_4$-bis $C_{12}$-Diene in Betracht. Außer den jeweiligen Homopolymeren kommen auch die Copolymeren und die bekannten Blockcopolymeren von Vinylaromaten und Dienen in Frage, wobei je nach Wahl des Initiators und Verfahrensweise Blockcopolymere oder Copolymere mit statistischer Verteilung der Monomeren erhalten werden können.

Die erfindungsgemäßen Polymeren mit den funktionellen Gruppen (I) werden entweder aus den lebenden anionisch polymerisierten oder aus mit Alkalimetall metallierten Homo-, Co-und/oder Blockcopolymerisaten aus Vinylaromaten und/oder Dienen nach bekannten Verfahren hergestellt.

Dazu werden die Monomeren in Gegenwart von Alkalimetallen oder deren Alkyl-oder Arylderivaten, insbesondere in Gegenwart der Alkylderivate des Lithiums wie sec.-Butyllithium in einem inerten Lösungsmittel wie aliphatischen, cycloaliphatischen oder aromatischen Kohlenwasserstoffen, insbesondere Hexan, Cyclohexan, Benzol oder Toluol bzw. in Gegenwart von Tetrahydrofuran anionisch polymerisiert.

Bei diesen Verfahren erhält man Polymere, welche an den Endgruppen Metall gebunden enthalten. Man kann aber auch Homo-, Co-und/oder Blockcopolymere aus Vinylaromaten und/oder Dienen herstellen und nachträglich mit Alkalimetallen oder deren Derivaten metallieren. Derartige metallierte Polymere enthalten die metallorganischen Gruppierungen statistisch längs der Kette verteilt.

Verfahren zur Metallierung ungesättigter Polymere und Umsetzen des erhaltenen metallierten Polymeren mit reaktionsfähigen chemischen Verbindungen sind auch in den US-Patenten 3 781 260 und 3 976 628 beschrieben.

Erfindungsgemäß werden die obigen metallorganischen Polymeren mit Stickstoffverbindungen der allgemeinen Formel II in Gegenwart eines Lösungsmittels umgesetzt. Als Lösungsmittel bevorzugt geeignet sind aliphatische, cycloaliphatische oder aromatische Kohlenwasserstoffe wie Hexan, Cyclohexan, Benzol, Toluol usw. Geeignet sind ferner Ether wie Tetrahydrofuran, Diethylether und andere, wie sie üblicherweise bei der anionischen Polymerisation als Lösungsmittel benutzt werden. Die Umsetzung erfolgt in Abwesenheit von Wasser und in inerter Atmosphäre z.B. unter Reinstickstoff. Die Umsetzung erfolgt zwischen -70°C und 100°C, vorzugsweise bei Temperaturen zwischen 0°C und 60°C.

Die Umsetzung mit den Carbodiimiden verläuft mit großer Geschwindigkeit und mit hoher Ausbeute. So können lebende Polymerlösungen mit styrylcarbanionischen Endgruppen, die eine intensive Orangerotfärbung aufweisen, mit äquimolaren Mengen auf das Verschwinden der Farbe austitriert werden.

Es ist ein Vorteil, daß man bei ihrer Anwendung als Aminierungsreagenz häufig keinen oder nur wenig Überschuß benötigt, so daß die umgesetzten Polymeren kaum durch nicht umgesetzte Stickstoffverbindungen verunreinigt sind.

Die erfindungsgemäßen Polymeren mit den funktionellen Gruppen (I) können zur Herstellung analoger Polymere mit den funktionellen Gruppen (III) verwendet werden, wenn sie mit einer dem Alkalimetall äquivalenten Menge Wasser oder Alkohol umgesetzt werden, wobei das Alkalimetall durch Wasserstoff ausgetauscht wird. Diese Umsetzung erfolgt spontan bei Zugabe des Wassers oder Alkohols, wobei sich außerdem Lithiumhydroxid oder -alkoholat bildet.

Die erfindungsgemäßen Polymeren (I) sind ferner sehr reaktionsfähig und können für weitere Umsetzungen verwendet werden. So setzen sie sich leicht mit Säurehalogeniden oder -anhydriden zu Säureimiden um, indem das Li durch die eingesetzten Säurereste ausgetauscht sind. In ähnlicher Weise reagieren auch Alkylhalogenide, wie Methyljodid, Benzylchlorid oder Chlormethylstyrol, um nur einige zu nennen.

Die erfindungsgemäßen Polymeren mit den funktionellen Gruppen (III) können ferner durch Hydrierbehandlung in Polymere überführt werden, in denen die aliphatischen ungesättigten Bindungen teilweise oder vollständig abgesättigt sind.

Die Hydrierung wird vorzugsweise mit molekularem Wasserstoff und Katalysatoren auf Basis von Metallen oder Metallsalzen der 8. Gruppe des Periodensystems durchgeführt. Sie kann in heterogener

Phase, z.B. mit Raney-Nickel oder in homogener Phase mit Katalysatoren auf Basis von Salzen, insbesondere den Carboxylaten, Alkoxyden oder Enolaten des Kobalts, Nickels ooder Eisens, die mit Metallalkylen, insbesondere Aluminiumalkylen kombiniert sind, erfolgen.

Die folgenden Beispiele dienen der Erläuterung der Erfindung.

Beispiel 1

In einem unter Reinstickstoff mit einer Lösung von n-Butyllithium in Cyclohexan gespülten, thermostatisierbaren 2-Liter-Reaktionsgefäß, der mit Rührer und Thermometer versehen ist, und mit einer Siliconmembran gasdicht verschlossen ist, werden 500 ml Cyclohexan und 52 g (1/2 Mol) Styrol gegeben. Bei 40°C wird mit einer Injektionsspritze unter gutem Rühren so lange eine 1,4 molare Lösung von sec.-Butyllithium in Cyclohexan zu der Styrollösung gegeben, bis eine bleibende schwache Gelbfärbung entsteht. Daraufhin werden weitere 10 mMol sec.-Butyllithium zugegeben. Die jetzt intensiv orange gefärbte Lösung erwärmt sich. Nach 1 Stunde ist die Polymerisation beendet. Mittels einer Injektionsspritze wird die Lösung mit Dicyclohexylcarbodiimid austitriert. Nach Zugabe von 2,1 g Aminierungsreagenz (~0,01 Mol) ist die orange Farbe verschwunden. Man hält die Lösung für weitere 15 min bei 40°C. Das Polymer wird unter intensivem Rühren durch Eingießen der Lösung in 5 l Ethanol gefällt. Nach Abfiltrieren und Trocknen bei 60°C im Vakuum werden an dem weißen pulvrigen Polystyrol die folgenden analytischen Daten festgestellt: Molekulargewicht aus dem Gewichtsmittel $M_w$: 5000 ermittelt durch GPC, die mit eng verteilten Standardpolystyrolen geeicht wurde.

Basenstickstoff bestimmt durch potentiometrische Titration mit Perchlorsäure in einer Mischung von Chlorbenzol/Eisessig: 0,27 Gew.%, Gesamtstickstoff bestimmt nach Kjeldahl: 0,55 Gew.% (Theorie: 0,56 % N). Das Polymer hat sich also mit 1 Mol Carbodiimid umgesetzt.

Beispiel 2

Ein mit Rührer, Thermometer, Rückflußkühler, Siliconmembran und Heizmantel ausgerüsteter 6-l-Reaktor wird mit einer Lösung von 3 $cm^2$ sec.-Butyllithium in Cyclohexan unter Reinstickstoff zur Reinigung ausgekocht.

Zur Herstellung eines 2-Blockcopolymeren aus 17 Gew.% Styrol und 83 Gew.% Butadien werden zunächst 93,6 g (0,9 Mol) Styrol in 3000 $cm^3$ Cyclohexan vorgelegt. Mit Hilfe einer Injektionsspritze wird bei 40°C so lange eine Lösung von sec.-Butyllithium zudosiert, bis eine leichte Gelbfärbung anzeigt, daß alle Verunreinigungen verbraucht sind. Darauf werden 12 mMol sec.-Butyllithium zugegeben und 1 Stunde bei 65°C das Styrol auspolymerisiert. Sodann läßt man 10,2 Mol Butadien, das durch Abdestillieren von Butyllithium gereinigt wurde, nach und nach bei dieser Temperatur zulaufen. 2 Stunden nach Beendigung des Zulaufs wird mit einer Injektionsspritze 1,6 g (12,5 Mol) Diisopropylcarbodiimid zugesetzt. Nach weiteren 20 min wird das Polymerisat in Ethanol ausgefällt, gewaschen und getrocknet.

Nach GPC-Methoden wird ein $M_w$ von 55.000 ermittelt. Gesamtstickstoff nach Kjeldahl: 0,05 Gew.%, Basenstickstoff durch potentiometrische Titration: 0,024 Gew.% (theoretischer Stickstoffgehalt: 0,05 Gew.%).

## Ansprüche

1. Mit Aminogruppen funktionell modifizierte Homo-, Co-und/oder Blockcopolymere aus Vinylaromaten und/oder Dienen, dadurch gekennzeichnet, daß sie funktionelle Gruppen der allgemeinen Formel I enthalten

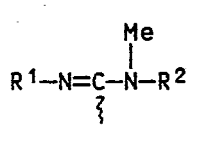

(I),

worin N = Stickstoff, $R^1$, $R^2$ = ein Alkyl-, Cycloalkyl-oder Arylrest und Me ein Alkalimetall ist.

2. Polymere nach Anspruch 1, dadurch gekennzeichnet, daß sie pro Makromolekül im Mittel 1 bis 10 der funktionellen Gruppen (I) enthalten.

3. Verfahren zur Herstellung der Polymeren nach Anspruch 1 aus lebenden, anionisch polymerisierten oder aus mit Alkalimetall metallierten Homo-, Co-und/oder Blockcopolymeren aus Vinylaromaten und/oder Dienen, dadurch gekennzeichnet, daß diese Polymere mit Stickstoffverbindungen der allgemeinen Formel II

$R^1\text{-}N=C=N\text{-}R^2$ (II),

in Gegenwart eines gegebenenfalls unpolaren Lösungsmittels umgesetzt werden, wobei N, $R^1$ und $R^2$ die oben angegebene Bedeutung haben.

4. Verwendung der Polymeren nach Anspruch 1 zur Herstellung analoger Polymere mit den funktionellen Gruppen der allgemeinen Formel III

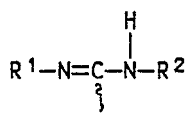

(III)

durch Hydrolyse oder Alkoholyse, wobei N, $R^1$, $R^2$ die oben angegebene Bedeutung haben.

5. Verwendung der funktionell modifizierten Polymeren nach Anspruch 4 zur Herstellung von Polymeren, die durch Hydrierbehandlung unter teilweiser oder vollständiger Absättigung der aliphatischen ungesättigten Bindungen hergestellt werden.